# EUROPÄISCHE PATENTSCHRIFT

(11) **EP 0 593 490 B1**
(45) Veröffentlichungstag und Bekanntmachung des Hinweises auf die Patenterteilung: **22.05.1996**
(21) Anmeldenummer: 92906145.5
(22) Anmeldetag: 10.03.1992
(51) Int. Cl.: F16K 15/02

(54) **RÜCKSCHLAGVENTIL**
CHECK VALVE
SOUPAPE ANTI-RETOUR

(30) Priorität: 05.07.1991 AT 1354/91
(43) Veröffentlichungstag der Anmeldung: 27.04.1994
(73) Patentinhaber: IDEAL-STANDARD GMBH, D-53008 Bonn (DE)
(72) Erfinder: BERGMANN, Konrad, D-5560 Wittlich (DE)
(74) Vertreter: Puchberger, Rolf, Dipl. Ing.
(86) Internationale Anmeldenummer: EP9200539
(87) Internationale Veröffentlichungsnummer: WO9301434

(56) Entgegenhaltungen:
- DE-A- 850 102
- GB-A- 2 056 024

## Beschreibung

Die Erfindung bezieht sich auf ein Rückschlagventil mit einem einen Ventilsitz aufweisenden Gehäuse, einem mit dem Ventilsitz zusammenwirkenden Ventilverschlußstück und einem vorgeschalteten Schmutzfangsieb, insbesondere für sanitäre Wasserarmaturen, wobei das Schmutzfangsieb mit dem Gehäuse fest verbunden ist. Ein derartiges Ventil ist z.B. aus der DE-C 850 102 bekannt.

Es besteht ein allgemeiner Bedarf an Rückflußverhinderern, um z.B. im Fall eines Unterdruckes das Eindringen von Luft in eine Zuleitung oder das Rücksaugen bereits durchgetretener Flüssigkeit in eine Versorgungsleitung zu verhindern. Bezogen auf Wasserversorgungsanwendungen besteht höchstes Interesse daran, einen Rückluß von Wasser in die Versorgungsleitung zu verhindern, da das Wasser möglicherweise keine Lebensmittelqualität mehr hat.

Zur Vermeidung solcher Rückflüsse ist es bekannt, Rückschlagventile zu verwenden, dessen bewegliches Ventilverschlußstück in Richtung eines Ventilsitzes federbelastet ist, der in dem Gehäuse des Rückschlagventiles ausgebildet ist.

Um die Ventilsteuerelemente gegen das Eindringen von z.B. "Teflon"-Hanf-Resten, Spänen oder dgl. Schmutzpartikel zu schützen, welche die Funktionssicherheit des Ventiles beeinträchtigen können, ist es bei sanitären Wasserarmaturen seit langem bekannt, den Ventilsteuerelementen Schmutzfangsiebe vorzuschalten, die als separate Bauteile separat herzustellen und zu montieren sind, was nicht nur relativ aufwendig in der Herstellung und bei der Montage ist, sondern darüberhinaus die Gefahr in sich birgt, daß z.B. die erneute Montage des Schmutzfangsiebes, insbesondere bei der Durchführung von Reparaturarbeiten, schlicht vergessen wird, was nach einer gewissen Zeit zum Funktionsausfall des Rückschlagventils führen kann.

Der Erfindung liegt die Aufgabe zugrunde, diesen Nachteil zu beseitigen und ein Rückschlagventil der eingangs genannten Art zu Schaffen, welches mit einem relativ geringen Kostenaufwand herstellbar, leicht zu montieren ist und insbesondere eine äußerst sichere Funktionsweise auch nach langer Betriebsdauer gewährleistet.

Diese Aufgabe wird dadurch gelöst, daß das Schmutzfangsieb eine konische Gestalt aufweist und sein größter, dem Gehäuse zugewandter Außendurchmesser kleiner ist als der Außendurchmesser des Gehäuses.

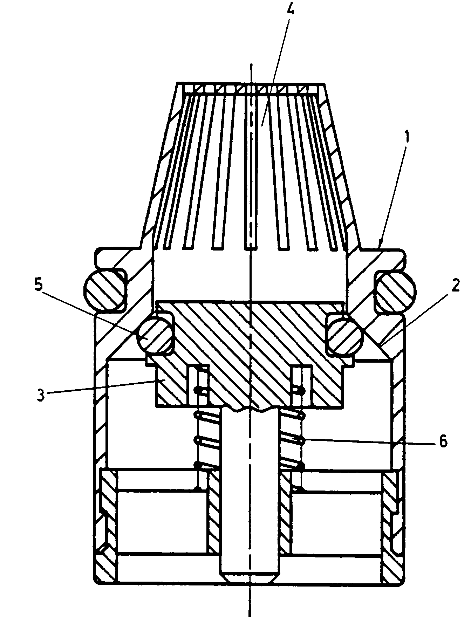

In der Zeichnung ist der Erfindungsgegenstand in einem Ausführungsbeispiel dargestellt, und zwar zeigt die Figur einen Längsschnitt durch ein erfindungsgemäßes Rückschlagventil, welches z.B. in den Zuleitungen zu einer sanitären Mischbatterie angeordnet sein kann, z.B. innerhalb der Anschlußstelle zwischen den "S"-Anschlüssen und einer Aufputzmischbatterie.

Darin ist mit 1 das Gehäuse bezeichnet, welches mit dem konisch geformten Schmutzfangsieb 4 einstückig ist. Das Gehäuse bildet gleichzeitig auch den Ventilsitz 2, gegen den das Ventilverschlußstück 3 unter Einwirkung der Feder 6 mit Hilfe der Dichtung 5 gepreßt wird.

## Patentansprüche

1. Rückschlagventil mit einem einen Ventilsitz (2) aufweisenden Gehäuse (1), einem mit dem Ventilsitz (2) zusammenwirkenden Ventilverschlußstück (3) und einem vorgeschalteten Schmutzfangsieb (4), insbesondere für sanitäre Wasserarmaturen, wobei das Schmutzfangsieb (4) mit dem Gehäuse (1) fest verbunden ist, dadurch gekennzeichnet, daß das Schmutzfangsieb (4) mit dem Gehäuse (1) einstückig ausgebildet ist und eine konische Gestalt aufweist und sein größter, dem Gehäuse (1) zugewandter Außendurchmesser kleiner ist als der Außendurchmesser des Gehäuses (1).

## Claims

1. A check valve comprising a casing (1) having a valve seat (2), a valve closure member (3) co-operating with the valve seat (2) and an upstream-disposed dirt trap filter (4), in particular for sanitary water fittings, wherein the dirt trap filter (4) is fixedly connected to the casing (1), characterised in that the dirt trap filter (4) is formed integrally with the casing (1) and is of a conical configuration and its largest outside diameter which is towards the casing (1) is smaller than the outside diameter of the casing (1).

## Revendications

1. Soupape anti-retour comportant un corps (1) dans lequel est ménagé un siège d'obturation (2), un obturateur (3) qui coopère avec le siège (2) et un filtre (4) disposé en amont pour retenir les impuretés, en particulier pour robinet d'eau sanitaire, le filtre à impuretés (4) étant lié rigidement au corps (1), caractérisée en ce que le filtre à impuretés(4) constitue une seule pièce avec le corps (1) et présente une forme conique, son diamètre extérieur le plus fort disposé en regard du corps (1) étant inférieur au diamètre extérieur du corps (1).
